(19) Europäisches Patentamt
European Patent Office
Office européen des brevets

(11) EP 0 425 798 B2

(12) NEW EUROPEAN PATENT SPECIFICATION

(45) Date of publication and mention
of the opposition decision:
**12.06.1996 Bulletin 1996/24**

(51) Int Cl.6: **F02D 41/40**, F02D 41/26

(45) Mention of the grant of the patent:
**08.12.1993 Bulletin 1993/49**

(21) Application number: **90117510.9**

(22) Date of filing: **11.09.1990**

(54) **Fuel injection control apparatus and method for a diesel engine**

Kraftstoffeinspritzungssteuergerät und Methode für einen Dieselmotor

Appareil et méthode de commande de l'injection de carburant pour moteur diesel

(84) Designated Contracting States:
**DE FR GB**

(30) Priority: **01.11.1989 JP 285164/89**

(43) Date of publication of application:
**08.05.1991 Bulletin 1991/19**

(73) Proprietor: **TOYOTA JIDOSHA KABUSHIKI KAISHA**
**Aichi-ken 471 (JP)**

(72) Inventors:
• **Itoh, Yoshiyasu c/o TOYOTA JIDOSHA K. K.**
**Toyota-shi, Aichi-ken (JP)**

• **Kobayashi, Fumiaki c/o TOYOTA JIDOSHA K. K.**
**Toyota-shi, Aichi-ken (JP)**

(74) Representative:
**Pellmann, Hans-Bernd, Dipl.-Ing. et al**
**Patentanwaltsbüro**
**Tiedtke-Bühling-Kinne & Partner**
**Bavariaring 4**
**80336 München (DE)**

(56) References cited:
EP-A- 0 135 460       DE-A- 3 617 329
JP-A- 6 261 774        US-A- 4 475 507
US-A- 4 519 353

**Description**

TECHNICAL FIELD

The present invention is directed to an apparatus and a method of controlling fuel injection of a diesel engine. More specifically, the timing of the beginning and end of the fuel injection cyde are controlled in accordance with the operation status of the diesel engine.

RELATED BACKGROUND ART

A conventional distribution type fuel injection apparatus is disclosed in, for example, Published Examined Japanese Patent Application No. 62-61774. This fuel injection system is designed to permit a fuel compressing plunger to rotate and reciprocate in response to the rotation of a cam. Fuel is compressed in a high pressure chamber in accordance with the rotational and reciprocal movement of the plunger, and then injected. This fuel injection apparatus has a electromagnetic valve for forcibly reducing the pressure in the high pressure chamber in order to terminate fuel injection during the fuel compressing process. The valve is dosed at the desired fuel injection start time and opened at the desired fuel injection end time, thereby acquiring a target fuel injection volume. The start and end times are determined in accordance with the operational status of the engine. The cam used in the fuel injection apparatus is a variable velocity type, and a fuel rate adjustor (timer) is employed to adjust the driving start position of the cam. The driving of the timer is controlled in accordance with the operational status of the engine, particularly, the engine rotation speed, to achieve the target fuel injection rate.

However, in such system, there is an inevitable mechanical delay between the receipt of an "open" or "close" command and the corresponding dosing or opening of the electromagnetic valve. Therefore, the actual fuel injection start and end timings are respectively delayed. This undesirable alters the actual fuel injection volume.

The fuel injection system is designed to control the actuation of the timer based upon the engine's rotation speed. The timer adjusts the cam's driving start position, thereby controlling the fuel injection rate. Accordingly, the fuel injection volume varies with changes in the fuel injection rate while the electromagnetic valve's delay is inevitably constant due to the mechanism. Consequently, the difference between the "target" injection volume and the actual volume injected will vary in accordance with the driving start position of the cam. In addition, since the plunger moves faster as the engine speed is increased, the injection rate increases with increases in the engine rotation speed. Thus, the difference in the "target" injection volume and the actual injection volume will also vary with changing engine speeds.

Therefore, the target fuel injection volume cannot accurately be acquired simply by controlling the dosing and opening of the electromagnetic valve at the desired injection start time and injection end time.

US-A- 4519 353 discloses the calculation of a fuel injection end time (= fuel amount) and start time of an injection system with a distributor type fuel injection pump, wherein the fuel injection end time but not the fuel injection start time are controlled by opening an electronically controlled spill valve.

The fuel injection start time is controlled only by controlling the relative timing of the injection pump plunger to the crank angle.

The opening time of the spill valve (fuel amount) is determined as a sum of (at least) two terms, a first term being a function of an operating parameter, the second being a function of the rpm.

A fuel injection control apparatus according to the pre-characterizing clause of claim 1 and a fuel injection control method according to the pre-characterizing clause of claim 9 are known from DE-A-3 617 329. According to this' known apparatus and method, a target injection amount is determined on the basis of the operational status of the diesel engine. A theoretical valve opening period of the electromagnetic injection adjusting valve is assigned to the target injection amount, that theoretical valve opening period being the period necessary for obtaining the target injection amount if there were no delays in response of the electromagnetic injection adjusting valve. A closing delay time and an opening delay time of the injection adjusting valve are detected at each operational cycle of the engine. The actual valve opening period is calculated by adding the closing delay time to the theoretical valve opening period and by subtracting the opening delay time from the theoretical valve opening period. The target valve closing timing and the target valve opening timing are computed such that they coincide with the beginning and the end of the actual valve opening period, respectively. Therefore, the known apparatus and method require detecting means for detecting the closing delay time and the opening delay time and, so that the accuracy of fuel injection depends on the proper functioning of these detecting means.

SUMMARY OF THE INVENTION

It is therefore an object of the present invention to provide a fuel injection control apparatus and a fuel injection control method for a diesel engine, which can obtain the injection end timing with precision even if the injection start timing changes and can always control the fuel injection volume with accuracy regardless of Changes in engine speed.

This object is achieved by the fuel injection control apparatus and method according to claim 1 and claim 9, respectively. The injection adjusting valve opens and doses a passage between a pressure chamber and a fuel chamber during the fuel compressing process within the pressure chamber in order to control the injection start and the injection end timings. The controller regulates the opening and closing of the adjusting valve based upon the operational status of the engine. It is arranged to compute a standard valve opening timing for the injection adjusting valve that corresponds to a desired injection end timing in the case wherein the injection adjusting valve closes the passage prior to the compressing process in the pressure chamber. The computed standard valve opening timing is a function of a parameter detected by an operational status detector. A tarjet valve dosing timing corresponding to a target injection start timing is also computed based on the parameter detected by the operational status detector. A target valve opening timing that compensates for delays in actuating the injection adjusting valve is also computed. The computed target valve opening timing is based upon the engine rotation speed, the standard valve opening timing and the target valve dosing timing. The injection control means controls the opening and dosing of the injection adjusting valve in accordance with the computed target valve opening and dosing timings.

The other objects of the present invention will become apparent from the detailed description of a preferred embodiment of the present invention presented below and from the appended claims. Those skilled in the art will readily understand the advantages of the present invention not discussed in this specification by working out this invention.

BRIEF DESCRIPTION OF THE DRAWINGS

The features of the present invention are set forth in the appended daims 1, 9. The invention, together objects and advantages thereof, may best be understood reference to the following description of the presently preferred embodiments together with the accompanying drawings in which:

Fig. 1 is a schematic structural diagram of a fuel injection control apparatus for a diesel engine;
Fig. 2 is a block diagram illustrating the structure of an electric control unit;
Fig. 3 is a flowchart showing the fuel injecting process executed by the electric control unit;
Fig. 4 is a graph illustrating the relation between the injection start timing and temperature of cooling water for different engine rotation speeds;
Fig. 5 is a graph illustrating the computation of a target valve opening timing;
Fig. 6 is a graph showing the results from actually measuring the relation between the injection volume and the injection end timing for different engine rotation speeds under a normal control;
Figs. 7 to 9 present graphs for explaining the actually measured results of the relation between the injection volume and the injection end timing for different engine rotation speeds under an injection rate control;
Fig. 10 is a graph for explaining the relation between the injection volume and the injection end timing under the normal control and individual injection rate controls; and
Fig. 11 is a graph for explaining the relation between the injection volume and the injection end timing under an injection rate control.

DETAILED DESCRIPTION OF A PREFERRED EMBODIMENT

A preferred embodiment of this invention will now be described referring to the accompanying drawings.

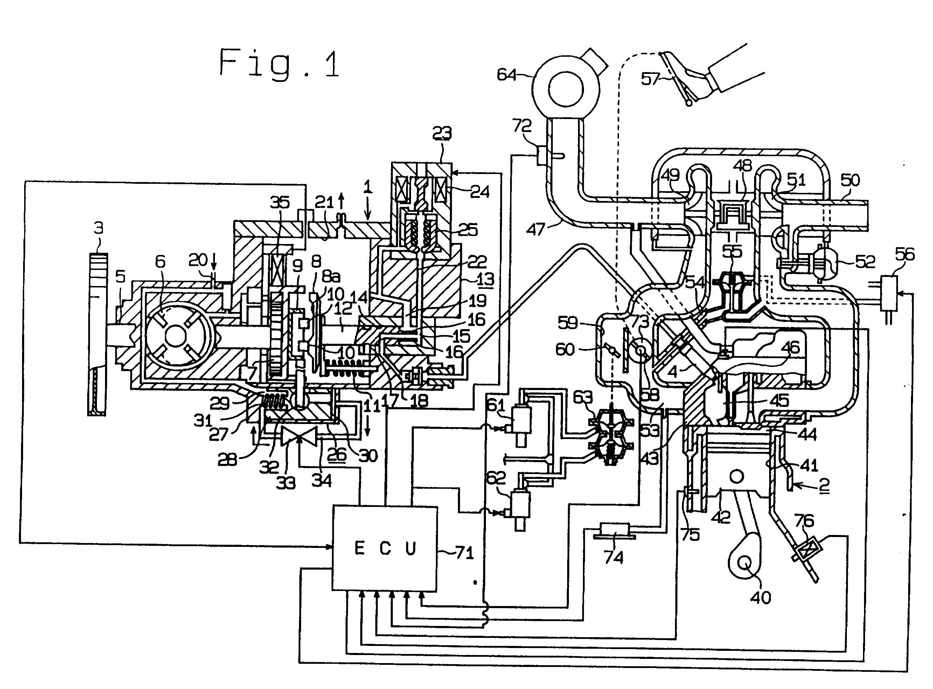

As schematically illustrated in Fig. 1, a distribution fuel injection pump 1 has a drive pulley 3 coupled to, and driven by, a crank shaft 40 of a diesel engine 2 by means of a belt or the like. The fuel injection pump 1 sends compressed fuel to the fuel injectors 4. Each injector 4 is associated with an individual cylinders of the diesel engine 2.

The drive pulley 3 is mounted on the distal end of a drive shaft 5 in the fuel injection pump 1. A vane type fuel feed pump 6 (rotated 90 degrees in Fig. 1) is provided at the center portion of the drive shaft 5. A diskshaped timing wheel 7 is attached to the proximal end of the drive shaft 5. Cuts whose quantity equals the number of the cylinders of the diesel engine 2, i.e., four cuts in this embodiment, are formed at equal angular intervals along the periphery of the timing wheel 7. There are 14 projections formed at equal angular intervals between the cuts: thus making 56 projections in total. The proximal end of the drive shaft 5 is connected to a cam plate 8 via a coupling (not shown) which transmits the rotational movement of the drive shaft 5 to the cam plate 8.

A roller ring 9 is provided between the timing wheel 7 and the cam plate 8. The roller ring 9 has a plurality of cam rollers 10 attached along the periphery thereof, which face cam plate 8. The number of rolling 10 is equal to the number of cylinders in the diesel engine 2. The cam plate 8 is urged by a spring 11 to always engage with the cam rollers 10.

A fuel compressing plunger 12 has its proximal end attached to the cam plate 8 and is rotatable together therewith. The cam plate 8 and the plunger 12 are driven interlockingly with the rotation of the drive shaft 5. More specifically, the rotational force of the drive shaft 5 is transmitted via the coupling to the cam plate 8. As the cam plate 8 rotates it periodically engages with the cam rollers 10, which lift the cam plate 8 causing it to reciprocate in the left and right directions in Fig. 1. This causes the plunger 12 to reciprocate while rotating. In other words, the plunger 12 is moved forward (lifted) when each cam roller 10 comes over the high portion of the associated cam plate face 8a, and is moved backward when the cam roller 10 is disengaged from the high portion of the cam plate face 8a.

The plunger 12 is fitted in a cylinder 14 formed in a pump housing 13, with a high pressure chamber 15 being defined between the free end face of the plunger 12 and the bottom of the cylinder 14. Suction grooves 16, equal in number to the number of cylinders and a distribution port 17 are formed at the outer surface of the free end of the plunger 12. Further, a distribution passage 18 and a suction port 19 are formed in the pump housing 13 in association with the suction grooves 16 and distribution port 17.

When the fuel feed pump 6 is driven by the rotation of the drive shaft 5, fuel is supplied via a fuel supply port 20 into a fuel chamber 21 from a fuel tank (not shown).

During a suction process in which the plunger 12 is moved backward to reduce the pressure in the high pressure chamber 15, one of the suction grooves 16 communicates with the suction port 19 to permit the fuel to flow into the high pressure chamber 15 from the fuel chamber 21. The fuel led into the high pressure chamber 15 is pressed out to the fuel injector 4 for each cylinder from the distribution passage 18 to be injected therefrom during a compressing process in which the plunger is moved forward to increase the pressure in the high pressure chamber 15.

A fuel-overflow spill path 22 for permitting the high pressure chamber 15 to communicate with the fuel chamber 15 is formed in the pump housing 13. A well-known electromagnetic spill valve 23 serving as an injection adjusting valve is provided at a mid point of the spill path 22. This spill valve 23, which is of a normally open type, has a valve 25 open when a coil 24 is in a non- excited (OFF) state, thus permitting the fuel in the high pressure chamber 15 to overflow into the fuel chamber 21. When the coil 24 is excited (ON), the valve 25 is dosed and the overflow of the fuel to the fuel chamber 21 from the high pressure chamber 15 is stopped.

Therefore, the opening/closing of the valve 23 is controlled by controlling the exciting time of the electro magnetic spill valve 23, and the amount of the fuel overflowing to the fuel chamber 21 from the high pressure chamber 15 is adjusted accordingly. Opening the spill valve 23 during the compressing process of the plunger 12 depressurizes the fuel in the high pressure chamber 15 and stops fuel injection from the fuel injector 4. In other words, even if the plunger is moved forward, the fuel pressure in the high pressure chamber 15 will not rise while the spill valve 23 is open, thus inhibiting the fuel injection from the fuel injector 4. Controlling the opening and dosing timings of the spill valve 23 during the forward movement of the plunger 12 controls the timings for starting and ending the fuel injection from the fuel injector 4, thus controlling the fuel injection volume.

At the lower side of the pump housing 13 is disposed a timer 26 (rotated 90 degrees in Fig. 1) for controlling the fuel injection timing. The timer 26 controls the position of the roller ring 9 with respect to the rotational direction of the drive shaft 5, thereby controlling the timing at which the cam plate faces 8a of the cam plate 8 to engage with the cam rollers 10 as well as the reciprocation timing of the cam plate 8 and plunger 12.

The timer 26 is operated by hydraulic pressure. It indudes a timer housing 27, a timer piston 28 fitted in the housing 27, and a timer spring 31 for urging the piston 28 in a low pressure chamber 29, located on one side in the housing 27, toward a pressure chamber 30 located on the other side. The piston 28 is coupled to the roller ring 9 via a slide pin 32.

Fuel compressed by the fuel feed pump 6 is introduced into the pressure chamber 30 of the timer housing 27. The position of the piston 28 is determined by the balance between the pressure of the introduced fuel and the urging force of the spring 31. The position of the piston 28 determines the position of the roller ring 9 and, through the cam plate 8, the timing of the reciprocation movement of the plunger 12.

The timer 26 is provided with a timing control valve 33 to control the fuel pressure. The timing control valve 33 is provided at a mid point of a fuel line 34 through which the pressure chamber 30 and low pressure chamber 29 of the timer housing 27 communicate with each other. This valve 33 is of a electromagnetic type whose opening/dosing operation is controlled by a duty-controlled exciting signal. Controlling the opening and dosing of the valve 33 controls the fuel pressure in the pressure chamber 30. The controlling of the fuel pressure controls the timing for lifting the plunger 12 to thereby adjust the timing for fuel injection from each fuel injector 4.

At the upper portion of the roller ring 9, a rotation sensor 35 constituted of an electromagnetic pickup coil is attached facing the outer surface of the timing wheel 7. This rotation sensor 35 detects passing of the projections or the like of the timing wheel 7 and outputs a timing signal (engine rotation pulse) corresponding to an engine rotation speed NE. Since the rotation sensor 35 is formed integral with the roller ring 9, it outputs a reference timing signal irrespective of the control operation of the timer 26.

The diesel engine 2 will be described below. Main combustion chambers 44 of the diesel engine 2 each indudes a corresponding cylinder 41, a piston 42 and a cylinder head 43. Each main combustion chamber 44 is provided with a secondary combustion chamber 45 communicating with the main chamber 44. Fuel is injected into the secondary combustion chamber 45 from its associated fuel injector 4. Each secondary combustion chamber 45 is provided with a glow plug 46 serving as an auxiliary starter.

A suction tube 47 of the diesel engine 2 is provided with a compressor 49 of a turbo charger 48. Likewise, a discharge tube 50 of the diesel engine 2 is provided with a turbine 51 of the turbo charger 48. The discharge tube 50 is further provided with a waste gate valve 52 for adjusting the turbo charger boost.

The diesel engine 2 has a recirculation tube 54 provided to recirculate part of exhaust air in the discharge tube 50 to a suction port 53 of the suction tube 47. An exhaust gas recirculation valve (EGR valve) 55 for adjusting the recirculation rate of exhaust air is provided at a center portion of the recirculation tube 54. The opening and dosing of this EGR valve 55 are controlled by a vacuum switching valve (VSV) 56.

A throttle valve 58 is provided in a center portion of suction tube 47. The throttle valve 58 is opened and dosed in accordance with the amount that the accelerator pedal 57 is depressed (the throttle position). The suction tube 47 is also provided with a bypass 59 in parallel to the throttle valve 58. A bypass flow metering valve 60 is provided at the bypass 59. The opening and closing of this valve 60 are controlled by an actuator 63 having a two-stage diaphragm chamber which is controlled by two VSVs 61 and 62. The opening and dosing of the valve 60 are also controlled responding to the operational status. More specifically, the valve 60 is controlled to be half open during idling in order to reduce the noise, vibration, etc..It is fully open during normal operational and is fully dosed for safety when the engine is hot operating.

The electromagnetic spill valve 23, timing control valve 33, the glow plugs 46 and the individual VSVs 56, 61 and 62, provided in the fuel injection pump 1, and the diesel engine 2, are electrically connected to an electronic control unit (hereinafter referred simply as ECU) 71, which controls the timings for driving these elements. This ECU 71 is composed of a standard valve opening timing computing means, a target valve dosing timing computing means, a target valve opening timing computing means and an injection control means.

Various sensors, which constitute operational status detecting means, are provided. These sensors indude a suction air temperature sensor 72, a throttle sensor 73, a suction air pressure sensor 74, a cooling water temperature sensor 75 and a crank rotation angle sensor 76. The air temperature sensor 72, provided at the suction tube 47, detects the temperature of air sucked via an air deaner 64. The throttle sensor 73 detects a throttle position ACCP corresponding to the throttling of the accelerator, from the open/dosed position of the throttle valve 58. The air pressure sensor 74 is provided at the vicinity of the suction port 53 to detect the pressure of sucked air. The sensor 75 detects the temperature of the cooling water, THW, of the diesel engine 2. The sensor 76 detects a predetermined crank rotation angle which changes in proportion to the number of rotations of the crank shaft 40 of the diesel engine 2.

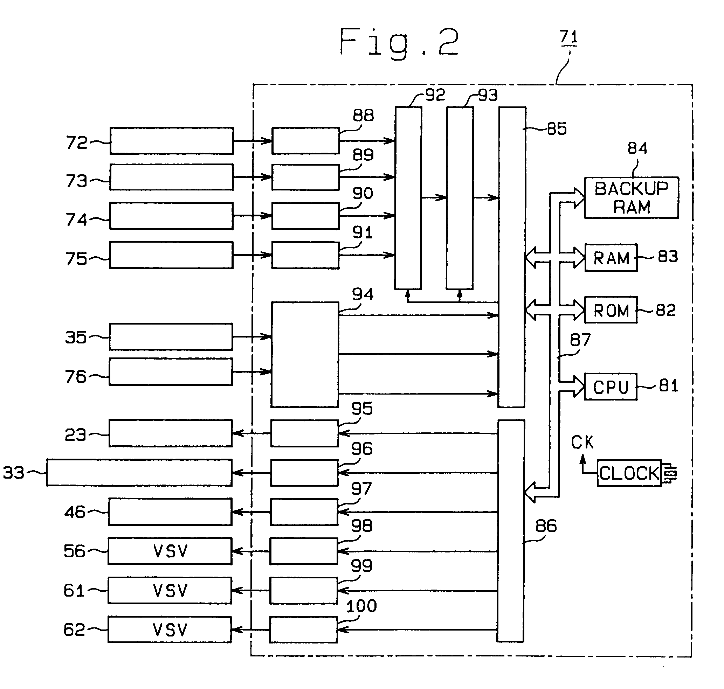

The ECU 71 is coupled with the above described individual sensors 72 to 76 and with the rotation sensor 35 provided in the fuel injection pump 1. Based on signals outputted from the individual sensors 35 and 72 to 76, the ECU 71 properly controls the electromagnetic spill valve 23, timing control valve 33, glow plugs 46, VSVs 56, 61 and 62, etc. The structure of the ECU 71 described above will be described below referring to the block diagram of Fig. 2. The ECU 71 comprises a central processing unit (CPU) 81, a read only memory (ROM) 82 in which a predetermined control program or the like is stored in advance, a random access memory (RAM) 83 for temporary storage of, for example, the results of computation performed by the CPU 81, and a back-up RAM 84 for saving prestored data. The ECU 71 is constituted as a logic-arithmetic circuit having these sections connected to an input port 85 and an output port 86, etc. by a bus 87.

The input port 85 is connected with the suction air temperature sensor 72, throttle sensor 73, suction air pressure sensor 74 and cooling water temperature sensor 75 through respective buffers 88 to 91, a multiplexer 92 and an analog-digital (AID) converter 93. The input port 85 is further connected to the above described rotation sensor 35 and crank rotation angle sensor 76 via a waveform shaping circuit 94. The CPU 81 stores the signals inputted via the input port 85 from the individual sensors 35 and 72-76, etc. as input values into the RAM 83. The output port 86 is connected with the electromagnetic spill valve 23, timing control valve 33, glow plugs 46, VSVs 56, 61 and 62, etc. through respective drive circuits 95 to 100. Based on the input values from the sensors 35 and 72-76, stored in the RAM 83, the CPU 81 properly controls the valves 23 and 33, glow plugs 46, VSVs 56, 61 and 62, etc.

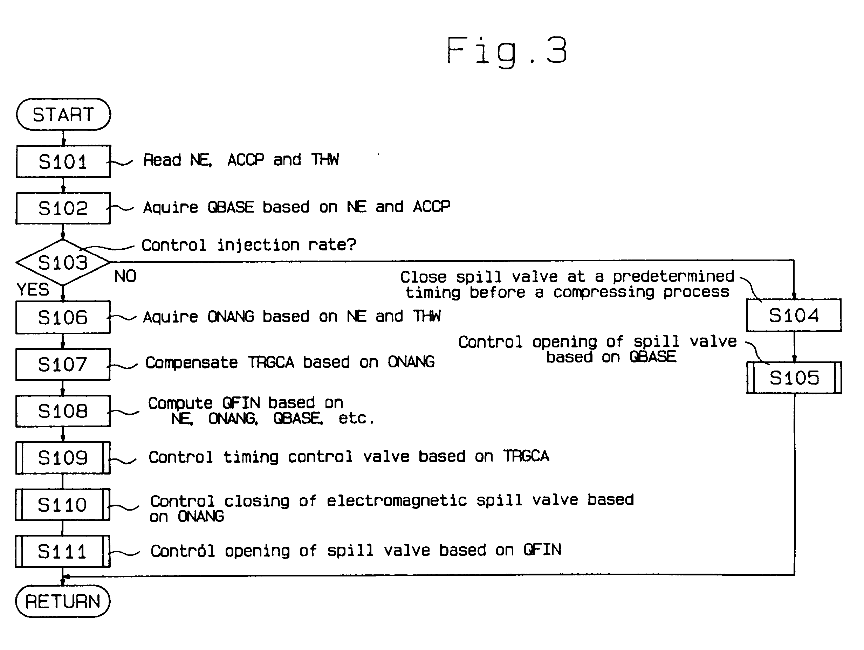

Referring to the flowchart shown in Fig. 3, a description will now be given regarding the process of controlling fuel injection for the diesel engine executed by the ECU 71. Fig. 3 illustrates only the routine executed by the ECU 71 which is associated with the control of opening and dosing the electromagnetic spill valve 23 and the control of opening and dosing the timing control valve 33. The routine is periodically executed.

In the first step 101 of this routine, the CPU 81 computes the engine rotation speed NE, throttle position ACCP and cooling water temperature THW based on the values detected by the rotation sensor 35, throttle sensor 73 and cooling water temperature sensor 75, and stores the results in the RAM 83.

Next in step 102, the CPU 81 computes a standard valve opening timing QBASE based on the engine rotation speed NE and throttle position ACCP stored in the RAM 83. This timing QBASE specifies an injection end timing (indicated by a crank rotation angle) in a case where the electromagnetic spill valve 23 is dosed before the plunger 12 starts the compressing process in the high pressure chamber 15. The standard valve opening timing QBASE is computed referring to a two-dimensional map (not shown) stored in advance in the ROM 82. A mechanically inevitable lag in response of the electromagnetic spill valve 23 is allowed in advance for the valve opening timing in the two-dimensional map.

In the subsequent step 103, the CPU 81 determines whether an injection rate control or a normal control, should be performed. The decision is made by determining whether the operation region for effecting the injection rate control is reached or not, based on the engine rotation speed NE and throttle position ACCP, stored in the RAM 83 in the aforementioned step 101. The injection rate control herein is to dose the electromagnetic spill valve 23 after the compressing process in the high pressure chamber 15 starts and to alter the driving timing of the plunger 12 to thereby adjust the fuel injection rate and the fuel injection timing. The normal control is to dose the valve 23 before the compressing process in the high pressure chamber 15 starts to thereby start fuel injection according to the forward movement of the plunger 12.

Under the normal control involving no injection rate control, the electromagnetic spill valve 23 is dosed at a predetermined timing before the compressing process starts. In this case, as the forward movement of the plunger 12 progresses, the fuel injection automatically starts.

Subsequently in step 105, when the computed standard valve opening timing QBASE arrives, the CPU 81 closes the electromagnetic spill valve 23 to stop the fuel injection and temporarily terminate the subsequent process.

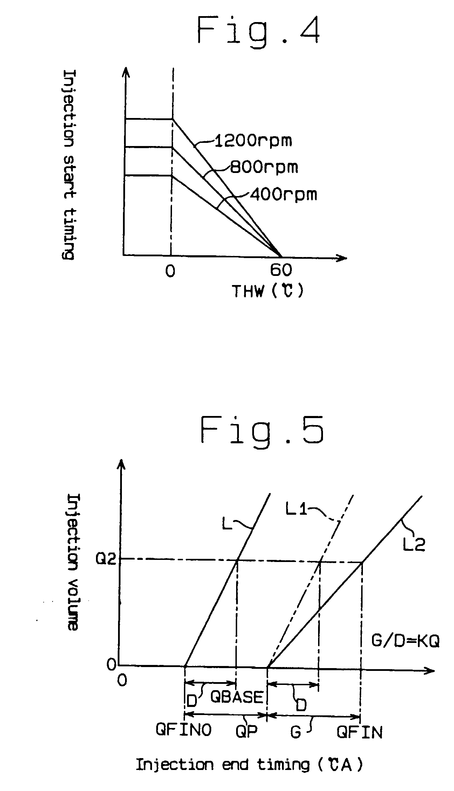

If the decision made in step 103 indicates the injection rate control, the CPU 81 computes a target valve dosing timing ONANG in step 106 based on the engine rotation speed NE and cooling water temperature THW previously stored in the RAM 83. This timing ONANG is the valve dosing timing (indicated by a crank rotation angle) of the electromagnetic spill valve 23, which corresponds to a target injection start timing for performing the injection rate control according to the engine rotation speed NE and cooling water temperature THW. The target valve closing timing ONANG is acquired, referring to a map as shown in Fig. 4 which is stored in advance in the ROM 82.

Next in step 107, a target timer angular advance TRGCA is compensated based on the computed target valve dosing timing ONANG. This compensation of the angle TRGCA is executed, referring a map (not shown) stored in advance in the ROM 82. The target timer lead angle TRGCA is a value (indicated by a crank rotation angle) used to adjust the timing for the forward movement of the plunger 12.

In the next step 108, a target valve opening timing QFIN is computed on the basis of the engine rotation speed NE stored in the RAM 83 and the previously computed standard valve opening timing QBASE and target valve dosing timing ONANG, etc. This timing QFIN is the valve opening timing (indicated by a crank rotation angle) of the electromagnetic spill valve 23, which corresponds to the target injection end timing and which is acquired by compensating the standard valve opening timing QBASE based on the engine rotation speed NE and target valve closing timing ONANG. The timing QFIN is computed according to the following equation (1):

$$QFIN = (QBASE - QFINO) \times KQ + QP + QFINO \qquad (1)$$

where QFINO indicates the valve opening timing in a case where the fuel injection volume is "O," and is acquired referring to a table (not shown) stored in advance in the ROM 82. KQ is an injection constant, and QP is a timing offset, and they are acquired referring the map stored in advance in the ROM 82, using the engine rotation speed NE and target valve dosing timing ONANG as parameters. Tables 1 and 2 show examples of these two values.

## Table 1 (KQ )

| ONANG＼NE | 600 | 800 | 1000 | 1200 | ... | (rpm) |
|---|---|---|---|---|---|---|
| 45 | 1.0 | 1.0 | 1.12 | 1.44 | . | ( °CA) |
| 48 | 1.06 | . | . | . | . | . |
| 51 | . | . | | | | |
| . | . | . | | | | |
| ( °CA) | . | . | | | | |

Table 2 (QP)

| NE<br>ONANG | 600 | 800 | 1000 | 1200 | ... | (rpm) |
|---|---|---|---|---|---|---|
| 45 | 0.7 | 1.5 | 2.3 | . | . | (°CA) |
| 48 | 1.4 | . | . | . | . | . |
| 51 | . | . | | | | |
| . | . | . | | | | |
| (°CA) | . | . | | | | |

In step 109, based on the previously compensated target timer lead angle TRGCA, the CPU 81 performs a process to control the timing control valve 33 in order to control the timer 26. In this process, by controlling the valve 33, the CPU 81 adjusts the position of the timer piston 28 of the timer 26 and alters the reciprocation timing of the plunger 12 in accordance with the target timer lead angle TRGCA.

In the next step 110, based on the previously computed target valve closing timing ONANG, the CPU 81 performs a process to control the closing of the electromagnetic spill valve 23 to start fuel injection at the desired target injection start timing.

In the subsequent step 111, based on the compensated target valve opening timing QFIN, the CPU 81 performs a process to control the opening of the electromagnetic spill valve 23 to stop fuel injection at the desired target injection end timing and temporarily terminate the subsequent process.

As described above, the opening and dosing of the electromagnetic spill valve 23 are controlled under the normal control and injection rate control, thereby ensuring the desired fuel injection volume and the desired fuel injection rate.

The computation executed based on the equation (1) will be described referring to Figs. 5 to 11.

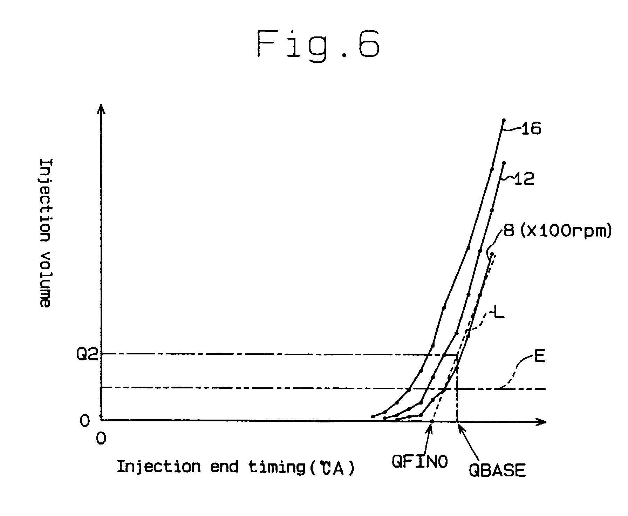

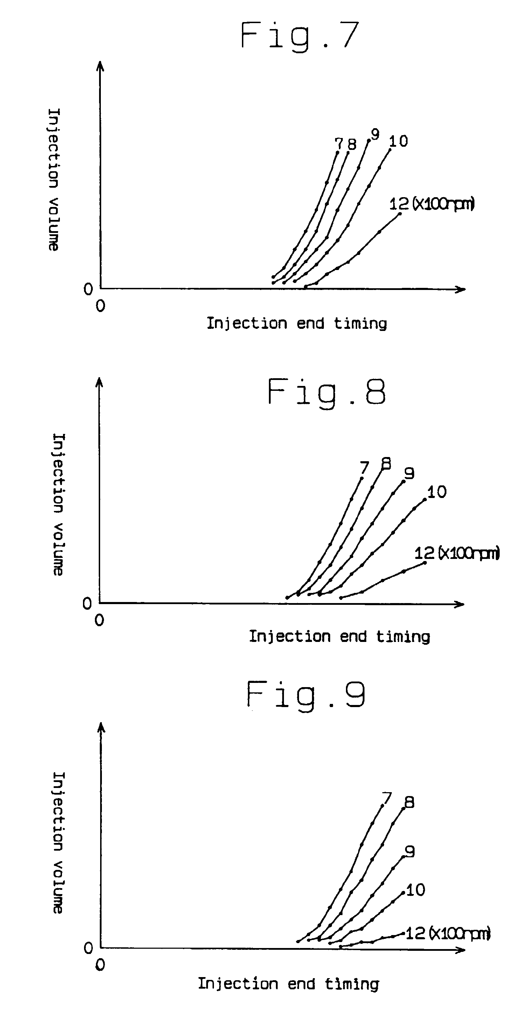

Fig. 6 shows a graph acquired by actually measuring the relation between the injection volume and the injection end timing for different engine rotation speeds NE under the normal control. In this diagram, above the injection volume level E indicated by the two-dot chain line is a region used by the normal driving of the diesel engine 2. Fig. 7 presents a graph acquired by actually measuring of the relation between the injection volume and the injection end timing for different engine rotation speeds NE under the injection rate control. Fig. 8 also presents a graph acquired by actual measurement under the injection rate control at an injection start timing later than that shown in Fig. 7. Fig. 9 likewise is a graph acquired by actual measurement under the injection rate control at an injection start timing later than that shown in Fig. 8.

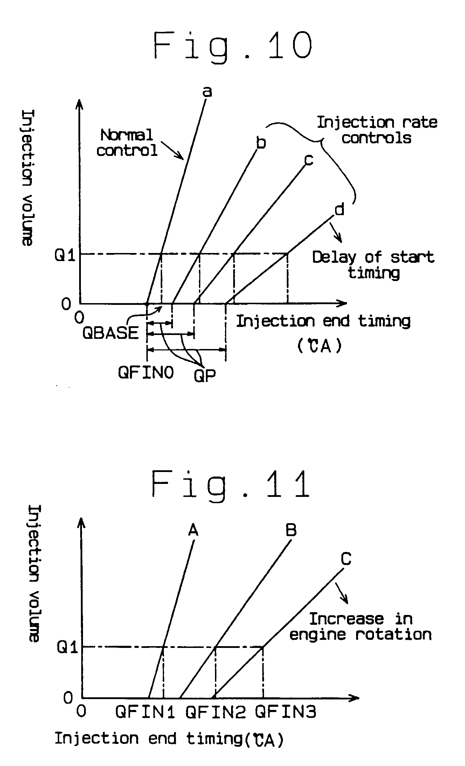

As should be apparent from Figs. 6 to 9, with the engine rotation speed NE being constant under the normal control and injection rate controls, replacing each actually-measured curve of the injection volume with an approximate straight line would yield what is shown in Fig. 10.

That is, at the injection end timing with respect to a certain target injection volume Q1, with the line "a" representing the normal control, the indination of the line gradually becomes smaller as for the lines b, c and d under the injection rate control by gradually delaying the injection start timing; and the injection end timing for the same target injection volume Q1 is delayed accordingly. In the line "a" for the normal control the injection end timing where the injection volume is "O" is defined as the valve opening timing QFINO. The injection end timing for the target injection volume Q1 of line "a" corresponds to the standard valve opening timing QBASE. The periods of time from the valve opening timing QFINO of the line "a" under the normal control to the injection end timings (valve opening timings) at which the injection volumes in the other lines "b", "c" and "d" become "O" are each defined as the timing offset QP.

Referring to Figs. 7 to 9 fort he injection rate control, with the injection start timing being constant, replacing each actually-measured curve with an approximate straight line would then yield what is shown in Fig. 11. That is, the inclination of the line gradually becomes smaller with an increase in the engine rotation speed NE; and the injection end timings for a certain target injection volume Q1, namely QFIN1, QFIN2 and QFIN3, are delayed.

The computation of the equation (1) for compensating the injection end timing (target valve opening timing QFIN) of the injection rate control based on the injection end timing (standard valve opening timing QBASE) under the normal control can therefore be explained as follows.

Provided that the engine rotation speed NE is 800 rpm, an approximate straight line L is obtained from the curve actually measured under the normal control. As shown in Figs. 5 and 6, the base of the straight line L becomes the valve opening timing QFINO and the injection end timing for the desired target injection volume Q2 becomes the standard valve opening timing QBASE.

A delay period needed for performing the desired injection rate control is compensated by the timing offset QP to make a translation of the straight line L of the normal control to the right of the horizontal axis in Fig. 5 by the timing offset QP, thus yielding an offset line L1 as indicated by the two-dot chain line in Fig. 5. The indination of this offset line L1 differs from that of the line obtained under the injection rate control with the same engine rotation speed NE. Compensating the indination of the offset line L1 by the injection constant KQ, therefore, yields a compensation line L2. It should be understood that this constant KQ is the ratio of the interval G between the base of the offset line L1 and the target valve opening timing QFIN against the difference D between the standard valve opening timing QBASE and the target valve opening timing QFIN.

The injection end timing for the desired target injection volume Q2 is therefore the target valve opening timing QFIN in this compensation line L2, and the target valve opening timing QFIN corresponding to the target injection end timing is compensated based on the equation (1).

According to the fuel injection control apparatus for a diesel engine of this embodiment, as described above, the standard valve opening timing QBASE corresponding to the injection end timing under the normal control in which the electromagnetic spill valve 23 is dosed before the fuel in the high pressure chamber 15 is compressed by the plunger 12 is compensated based on the engine rotation speed NE and the computed target valve dosing timing ONANG to compute the target valve opening timing QFIN which corresponds to the target injection end timing. With the response lag of the electromagnetic spill valve 23 reflected in advance on the standard valve opening timing QBASE to be computed, therefore, the valve 23 can be opened at the proper timing to terminate the fuel injection irrespective of the normal control or injection rate control. In other words, the opening of the electromagnetic spill valve 23 can be properly controlled by the proper target valve opening timing QFIN reflecting the expected response lag of the valve 23. Accordingly, the fuel injection volume can always be controlled with precision regardless of a change in the engine rotation speed NE or the normal control or injection rate control.

According to this embodiment, since the fuel injection automatically starts in response to the beginning of the forward movement of the plunger 12 in the normal control, only the influence of the lagged response of the electromagnetic spill valve 23 on the standard valve opening timing QBASE corresponding to the injection end timing should be considered. In this case, the proper standard valve opening timing QBASE for the same target injection volume would differ for different engine rotation speeds NE. According to this embodiment, however, since the standard valve opening timing QBASE corresponding to the target injection volume is directly computed on the basis of the engine rotation speed, etc. without computing the target injection volume itself, the proper valve opening timing can be acquired without performing special compensation. In addition, in acquiring the target valve opening timing QFIN under the injection rate control, by utilizing a proper standard valve opening timing QBASE as described above, the standard valve opening timing QBASE is compensated on the basis of the engine rotation speed NE, etc. This eliminates the need to compute the desired target injection volume itself and can provide the proper valve opening timing reflecting the expected response lag of the electromagnetic spill valve 23.

According to this embodiment, the standard valve opening timing QBASE is compensated based on the engine rotation speed, etc. to directly compute the target valve opening timing QFIN without computing the desired target injection volume itself, irrespective of the normal control or injection rate control. This can therefore eliminate the need to refer to a three-dimensional map, using the target injection volume, engine rotation speed and valve opening command timing as parameters, in order to compute the target valve opening timing, which is required in a case where the standard valve opening timing QBASE is not used. Therefore ,the memory capacity of the required ROM 82 or the like in the ECU 71 may be reduced.

Although, in the above embodiment, the map having a predetermined pattern with the cooling water temperature THW and engine rotation speed NE as parameters as shown in Fig. 4 is referred to in order to obtain the target valve dosing timing ONANG corresponding to the injection start timing, a map with another pattern may also be referred to.

Further, although the present invention is specifically applied to the diesel engine 2 having the turbo charger 48 as shown in Fig. 2 in the above embodiment, this invention can be embodied with a diesel engine without a turbo charger.

Furthermore, the fuel injection valve may be a valve actuated by a piezoelectric element. A fuel injection control apparatus and a fuel injection control method for a diesel engine are disclosed. The timings for starting and ending fuel injection from a fuel injection pump are controlled n accordance with the operational status of a diesel engine. Even if the timing for starting fuel injection from the fuel injection pump is altered, the injection end timing is accurately acquired to always control the fuel injection volume with a high accuracy regardless of a variation in engine rotation speed. A standard valve opening timing corresponding to the injection end timing in a case where an electromagnetic spill valve is dosed before a compressing process in a high pressure chamber of the fuel injection pump starts is compensated on the basis of a target valve dosing timing of the electromagnetic spill valve corresponding to a target injection start timing and on an engine rotation speed to thereby compute a target valve opening timing corresponding to a target injection end timing. Closing and opening of the electromagnetic spill valve are controlled in accordance with the target valve dosing timing and target valve opening timing.

## Claims

1. A fuel injection control apparatus for a diesel engine (2), including

a fuel compressing device (12) for compressing fuel within a pressure chamber (15);
a passage (22) for permitting communication between the pressure chamber (15) and a fuel chamber (21);
an injection adjusting valve (23) for opening and closing the passage (22) between the pressure chamber (15) and the fuel chamber (21);
an operational status detecting means (35, 73, 75) for detecting parameters of the operational status of the engine (2) including the rotation speed (NE) of the engine (2);
wherein the opening and closing of the injection adjusting valve (23) are executed in accordance with the operational status of the diesel engine (2) during a compression stroke in the pressure chamber (15) to control the injection start timing and the injection end timing; and
injection control means (71) for controlling the opening and closing of the adjusting valve (23) based upon the operational status of the engine (2);
wherein the injection control means (71) computes a target valve closing timing (ONANG) for the injection adjusting valve (23) that corresponds to the target injection start timing, based on parameters detected by the operational, status detecting means (35, 73, 75); and
wherein the injection control means (7) computes a target valve opening timing (QFIN) that compensates for delays in response of the injection adjusting valve (23) and that corresponds to a target injection end timing; and
wherein the injection control means (71) controls the opening and closing of the injection adjusting valve (23) in accordance with the computed target valve closing timing (ONANG) and with the computed target valve opening timing (QFIN),
characterized
in that an injection timing adjuster (26) is provided for adjusting the fuel injection timing in accordance with the operational status of the engine (2) by changing the drive timing of the fuel compressing device (12); and
in that said injection control means (71) computes with reference to a map a standard valve opening timing (QBASE) for the injection adjusting valve (23) that corresponds to a desired target injection end timing in the case where the injection adjusting valve (23) closes the passage (22) prior to the start of a compression stroke in the pressure chamber (15), said map defining the standard valve opening timing (QBASE) as a function of parameters detected by the operational status detecting means (35, 73, 75) while allowing in advance a delay in response of the injection adjusting valve (23); and
in that said injection control means (7) computes said target valve opening timing (QFIN) on the basis of said computed standard valve opening timing (QBASE) in addition to the engine rotation speed (NE) and the target valve, closing timing (ONANG).

2. A fuel injection control apparatus as recited in Claim 1 wherein the diesel engine (2) further indudes a turbo charger (48).

3. A fuel injection control apparatus as recited in either Claim 1 or 2, wherein the fuel compressing device includes a plunger (12), and a driving unit for driving the plunger (12), the driving unit induding a cam plate (8) and cam rollers (10).

4. A fuel injection control apparatus as recited in any of the preceding daims wherein the injection timing adjusting timer (26) indudes a housing (27), a piston (28) coupled to the fuel compressing device (12) and driven by hydraulic pressure within the housing (27), and a valve (33) for adjusting the hydraulic pressure in the housing (27).

5. The fuel injection control apparatus as daimed in any of the preceeding daims, wherein the injection adjusting valve (23) is an electromagnetic spill valve.

6. The fuel injection control apparatus as claimed in any of the preceeding daims, wherein the operational status detecting means has a rotation sensor (35), a throttle sensor (73) and a cooling water temperature sensor (75).

7. A fuel injection control apparatus as recited in any of the preceding claims wherein the injection control means constitutes a single electronic control unit (71).

8. The fuel injection control apparatus as claimed in claim 7, wherein the electronic control unit (71) comprises a random access memory (83) for storing computation result data, a read only memory (82) for storing an operational control program for the injection adjusting valve (23), and a central processing unit (81) for actuating the injection adjusting valve (23) according to the data and program.

9. A fuel injection control method for a diesel engine (2) for permitting an injection adjusting valve (23) to open and close a passage (22) between a pressure chamber (15) and a fuel chamber (21) in accordance with an operational status of the diesel engine (2) during a compression stroke in which a fuel in the pressure chamber (15) is compressed by a fuel compressing device (12) on the basis of the speed (NE) of the diesel engine (2) in order to control the injection start timing and the injection end timing, comprising the steps of:

computing a target valve closing timing (ONANG) of the injection adjusting valve (23) that corresponds to the target injection start timing based on the operational status of the diesel engine (2);
computing a target valve opening timing (QFIN) that corresponds to the target injection end timing; and controlling the opening and the closing of the injection adjusting valve (23) in accordance with the computed target valve closing timing (ONANG) and with the computed target valve opening timing (QFIN) ;
characterized by the steps of:
computing a standard valve opening timing (QBASE) for the injection adjusting valve (23) that corresponds to a desired injection end timing in the case where the passage (22) is closed by the injection adjusting valve (23) prior to the start of the compression stroke in the pressure chamber (15), the computed standard valve opening timing (QBASE) being computed with reference to a map defining the, standard valve opening timing (QBASE) as a function of the operational status of the diesel engine (2) while allowing in advance a delay in response of the injection adjusting valve (23); and
computing said target valve opening timing (QFIN) by compensating the standard valve opening timing (QBASE) based on the computed target valve closing timing (ONANG) and the engine rotation speed (NE).

10. A fuel injection control method for a diesel engine as claimed in claim 9 wherein the operational status of the diesel engine (2) is detected from the group including a throwing accelerator and an engine rotational speed.

**Patentansprüche**

1. Brennstoffeinspritzregeleinrichtung für einen Dieselmotor (2), die eine Brennstoffkomprimiervorrichtung (12) zum Komprimieren von Brennstoff in einer Druckkammer (15), einen Durchlaß (22) für die Verbindung zwischen der Druckkammer (15) und einer Brennstoffkammer (21), ein Einspritzregelventil (23) für das Öffnen und Schließen des Durchlaßes (22) zwischen der Druckkammer (15) und der Brennstoffkammer (21), eine Betriebszustand-Detektoreinrichtung (35, 73, 75) zum Erfassen von Parametern für den Betriebszustand des Motors (2) einschließlich der Drehzahl (NE) des Motors (2), wobei das Öffnen und Schließen des Einspritzregelventils entsprechend dem Betriebszustand des Dieselmotors (2) während eines Kompressionshubes in der Druckkammer (15) ausgeführt wird, um den Einspritzanfangszeitpunkt und den Einspritzendzeitpunkt zu steuern, und eine Einspritzsteuereinrichtung (71) zum Steuern des Öffnens und Schließens des Regelventils (23) gemäß dem Betriebszustand des Motors (2) enthält, wobei die Einspritzsteuereinrichtung (71) aufgrund der durch die Betriebszustand-Detektoreinrichtung (75, 73, 75) erfaßten Parameter einen Soll-Ventilschließzeitpunkt (ONANG) für das Einspritzregelventil (23) berechnet, der dem Soll-Einspritzanfangszeitpunkt entspricht,

die Einspritzsteuereinrichtung (71) einen Soll-Ventilöffnungszeitpunkt (QFIN) berechnet, der Verzögerungen hinsichtlich des Ansprechens des Einspritzregelventils (23) korrigiert und einem Soll-Einspritzendzeitpunkt entspricht, und
die Einspritzsteuereinrichtung (71) das Öffnen und Schließen des Einspritzregelventils (23) entsprechend dem berechneten Soll-Ventilschließzeitpunkt (ONANG) und dem berechneten Soll-Ventilöffnungszeitpunkt (QFIN) steuert,
dadurch gekennzeichnet,
daß ein Einspritzzeitregler (26) zum Einstellen der Brennstoffeinspritzzeit entsprechend dem Betriebszustand des Motors (2) durch Ändern der Antriebszeit der Brennstoffkomprimiervorrichtung (12) vorgesehen ist,
daß die Einspritzsteuereinrichtung (71) unter Bezugnahme auf eine Tabelle einen Normal-Ventilöffnungszeitpunkt (QBASE) für das Einspritzventil (23) berechnet, der einem gewünschtem Soll-Einspritzendzeitpunkt in dem Fall entspricht, daß das Einspritzregelventil (23) den Durchlaß (22) vor dem Beginn eines Kompressionshubes in der Druckkammer (15) schließt, wobei die Tabelle den Normal-Ventilöffnungszeitpunkt (QBASE) als eine Funktion von durch die Betriebszustand-Detektoreinrichtung (35, 73, 75) erfaßten Parametern definiert, während im voraus eine Verzögerung hinsichtlich des Ansprechens des Einspritzregelventils (23) berücksichtigt ist, und

daß die Einspritzsteuereinrichtung (71) den Soll-Ventilöffnungszeitpunkt (QFIN) aufgrund des berechneten Normal-Ventilöffnungszeitpunktes (QBASE) zusätzlich zu der Maschinendrehzahl (NE) und aufgrund des Soll-Ventilschließzeitpunktes (ONANG) berechnet.

2. Brennstoffeinspritzregeleinrichtung nach Anspruch 1, bei der der Dieselmotor (2) ferner einen Turbolader (48) enthält.

3. Brennstoffeinspritzregeleinrichtung nach Anspruch 1 oder 2, bei der die Brennstoffkomprimiervorrichtung einen Druckkolben (12) und eine Antriebseinheit für das Antreiben des Druckkolbens (12) enthält, wobei die Antriebseinheit eine Nockenplatte (8) und Nockenrollen (10) enthält.

4. Brennstoffeinspritzregeleinrichtung nach einem der vorangehenden Ansprüche, bei der der Einspritzzeitregler (26) ein Gehäuse (27), einen mit der Brennstoffkomprimiervorrichtung (12) verbundenen und durch hydraulischen Druck in dem Gehäuse (27) angetriebenen Kolben (28) und ein Ventil (33) zum Einstellen des hydraulischen Druckes in dem Gehäuse (27) enthält.

5. Brennstoffeinspritzregeleinrichtung nach einem der vorangehenden Ansprüche, bei der das Einspritzregelventil (23) ein elektomagnetisches Überlaufventil ist.

6. Brennstoffeinspritzregeleinrichtung nach einem der vorangehenden Ansprüche, bei der die Betriebszustand-Detektoreinrichtung einen Umdrehungssensor (35), einen Drosselsensor (73) und einen Kühlwassertemperatursensor (75) hat.

7. Brennstoffeinspritzregeleinrichtung nach einem der vorangehenden Ansprüche, bei der die Einspritzsteuereinrichtung eine einzelne elektronische Steuereinheit (71) bildet.

8. Brennstoffeinspritzregeleinrichtung nach Anspruch 7, bei der die elektronische Steuereinheit (71) einen Schreib/Lesespeicher (83) zum Speichern von Rechenergebnisdaten, einen Festspeicher (82) zum Speichern eines Betriebssteuerprogramms für das Einspritzregelventil (23) und eine Zentraleinheit (81) zum Betätigen des Einspritzregelventils (23) gemäß den Daten und dem Programm enthält.

9. Brennstoffeinspritzregelverfahren für einen Dieselmotor (2), welches es zum Steuern des Einspritzanfangszeitpunktes und des Einspritzendzeitpunktes ermöglicht, während eines Kompressionshubes, bei dem gemäß der Drehzahl (NE) des Dieselmotors (2) durch eine Brennstoffkomprimiervorrichtung (12) Brennstoff in einer Druckkammer (15) komprimiert wird, durch ein Einspritzregelventil (23) entsprechend einem Betriebszustand des Dieselmotors (2) einen Durchlaß (22) zwischen der Druckkammer (15) und einer Brennstoffkammer (21) zu öffnen und zu schließen, mit Schritten zum

Berechnen eines Soll-Ventilschließzeitpunktes (ONANG) für das Einspritzregelventil (23), der dem Soll-Einspritzanfangszeitpunkt entspricht, aufgrund des Betriebszustandes des Dieselmotors (2),
Berechnen eines Soll-Ventilöffnungszeitpunktes (QFIN), der dem Soll-Einspritzendzeitpunkt entspricht, und Steuern des Schließens und des Öffnens des Einspritzregelventils (23) entsprechend dem berechneten Soll-Ventilschließzeitpunkt (ONANG) und entsprechend dem berechneten Soll-Ventilöffnungszeitpunkt (QFIN),
gekennzeichnet durch Schritte zum
Berechnen eines Normal-Ventilöffnungszeitpunktes (QBASE) für das Einspritzregelventil (23), der einen erwünschten Einspritzendzeitpunkt in dem Fall entspricht, daß der Durchlaß (22) durch das Einspritzregelventil (23) vor dem Beginn des Kompressionshubes in der Druckkammer (15) geschlossen wird, wobei der berechnete Normal-Ventilöffnungszeitpunkt (QBASE) unter Bezugnahme auf eine Tabelle berechnet wird, die den Normal-Ventilöffnungszeitpunkt (QBASE) als Funktion des Betriebszustandes des Dieselmotors (2) definiert, während im voraus eine Verzögerung hinsichtlich des Ansprechens des Einspritzregelventils (23) berücksichtigt ist, und
Berechnen des Soll-Ventilöffnungszeitpunktes (QFIN) durch Korrigieren des Normal-Ventilöffnungszeitpunktes (QBASE) aufgrund des berechneten Ventilschließzeitpunktes (ONANG) und der Maschinendrehzahl (NE).

10. Brennstoffeinspritzregelverfahren für einen Dieselmotor (2) nach Anspruch 9, bei dem der Betriebszustand des Dieselmotors (2) aus einer Gruppe erfaßt wird, zu der eine Fahrpedaldrosselung und eine Motordrehzahl zählen.

**Revendications**

1. Un appareil de commande de l'injection de carburant pour un moteur diesel (2), comprenant un dispositif de compression de carburant (12) pour comprimer le carburant à l'intérieur d'une chambre de pression (15), un passage (22) pour permettre la communication entre la chambre de pression (15) et une chambre de carburant (21), une valve de réglage d'injection (23) pour ouvrir et fermer le passage (22) entre la chambre de pression (15) et la chambre de carburant (21), des moyens de mesure d'état de fonctionnement (35, 73, 75) pour mesurer les paramètres de l'état de fonctionnement du moteur (2) comprenant la vitesse de rotation (NE) du moteur; dans lequel l'ouverture et la fermeture de la valve de réglage d'injection (23) sont réalisées en fonction de l'état de fonctionnement du moteur diesel (2) pendant une course de compression dans la chambre de pression (15) pour commander les instants de début et de fin d'injection, et des moyens de commande d'injection (71) pour commander l'ouverture et la fermeture de la valve de réglage d'injection (23) sur la base de l'état de fonctionnement du moteur (2), dans lequel les moyens de commande d'injection (71) calculent un instant de consigne de fermeture de valve (ONANG) pour la valve de réglage d'injection (23) qui correspond à l'instant de début d'injection de consigne, sur la base des paramètres mesurés par les moyens de mesure d'état de fonctionnement (35, 73, 75), et dans lequel les moyens de commande d'injection (71) calculent un instant de consigne d'ouverture de valve (QFIN) qui assure la compensation des retards dans la réponse de la valve de réglage d'injection (23) et qui correspond à un instant de consigne de fin d'injection; et dans lequel les moyens de commande d'injection commandent l'ouverture et la fermeture de la valve de réglage d'injection (23) en fonction de l'instant calculé de consigne de fermeture de valve (ONANG) et de l'instant calculé de consigne d'ouverture de valve (QFIN),
caractérisé en ce qu'un organe de calage d'injection (26) est prévu pour régler l'instant d'injection de carburant en fonction de l'état de fonctionnement du moteur (2) en modifiant le calage d'entraînement du dispositif de compression de carburant (12); et en ce que lesdits moyens de commande d'injection (71) calculent en référence à une carte un instant standard d'ouverture de valve (QBASE) pour la valve de réglage d'injection (23) qui correspond à un instant souhaité de consigne de fin d'injection dans le cas où la valve de réglage d'injection (23) ferme le passage (22) avant le début d'une course de compression dans la chambre de pression (15), ladite carte définissant l'instant d'ouverture de valve standard (QBASE) en fonction des paramètres mesurés par les moyens de mesure d'état de fonctionnement (35, 73, 75) tout en permettant à l'avance un retard dans la réponse de la valve de réglage d'injection (23), et en ce que lesdits moyens de commande d'injection (7) calculent ledit instant de consigne d'ouverture de valve (QFIN) sur la base dudit instant calculé standard d'ouverture de valve (QBASE) en addition à la vitesse de rotation de moteur (NE) et à l'instant de consigne de fermeture de valve (ONANG).

2. Un appareil de commande d'injection de carburant selon la revendication 1, dans lequel le moteur diesel (2) comporte en outre un turbo-compresseur (48).

3. Un appareil de commande d'injection de carburant selon la revendication 1 ou 2, dans lequel le dispositif de compression de carburant comporte un piston-plongeur (12) et une unité d'entraînement pour entraîner le piston plongeur (12), l'unité d'entraînement comportant un plateau de came (8) et des rouleaux de came (10).

4. Un appareil de commande d'injection de carburant selon l'une quelconque des revendications précédentes, dans lequel le dispositif de réglage de l'instant d'injection (26) comporte un boîtier (27), un piston (28) couplé au dispositif de compression de carburant (12) et entraîné par la pression hydraulique à l'intérieur du boîtier (27), et une valve (33) pour régler la pression hydraulique dans le boîtier (27).

5. Un appareil de commande d'injection de carburant selon l'une quelconque des revendications précédentes, dans lequel la valve de réglage d'injection (23) est une valve électro-magnétique de décharge (retour à la bâche).

6. Un appareil de commande d'injection de carburant selon l'une quelconque des revendications précédentes, dans lequel les moyens de détection d'état de fonctionnement comportent un capteur de rotation (35), un capteur (73) d'étranglement ou de papillon et un capteur de température d'eau de refroidissement (75).

7. Un appareil de commande d'injection de carburant selon l'une quelconque des revendications précédentes, dans lequel les moyens de réglage d'injection constituent une unité de commande électronique unique (71).

8. L'appareil de commande d'injection de carburant selon la revendication 7, dans lequel l'unité de commande électronique (71) comporte une mémoire RAM (83) de stockage des résultats du calcul, une mémoire ROM (82) pour le stockage d'un programme de commande de fonctionnement pour la valve de réglage d'injection (23), et une unité centrale de traitement (81) pour actionner la valve de réglage d'injection (23) en fonction des données et du programme.

9. Un procédé de commande d'injection de carburant pour un moteur diesel (2) permettant à une valve de réglage d'injection (23) d'ouvrir et de fermer un passage (22) entre une chambre de pression (15) et une chambre de carburant (21) en fonction de l'état de fonctionnement du moteur diesel (2) lors d'une course de compression au cours de laquelle du carburant se trouvant dans la chambre de pression (15) est comprimé par un dispositif de compression de carburant (12) sur la base de la vitesse (NE) du moteur diesel (2) afin de commander l'instant de début d'injection et l'instant de fin d'injection, comprenant les étapes consistant:

   - à calculer un instant de consigne d'ouverture de valve (ONANG) de la valve de réglage d'injection (23) correspondant à l'instant de début d'injection sur la base de l'état de fonctionnement du moteur diesel (2);
   - à calculer un instant de consigne d'ouverture de valve (QFIN) correspondant à l'instant de consigne de fin d'injection; et
   - à commander l'ouverture et la fermeture de la valve de réglage d'injection (23) en fonction de l'instant calculé de consigne de fermeture de valve (ONANG) et de l'instant calculé de consigne d'ouverture de valve (QFIN);

   caractérisé par les étapes consistant:

   - à calculer un instant standard d'ouverture de valve (QBASE) pour la valve de réglage d'injection (23) qui corresponde à un instant souhaité de fin d'injection dans le cas où le passage (22) est fermé par la valve de réglage- d'injection (23) avant le début de la course de compression dans la chambre de pression (15), l'instant calculé standard d'ouverture de valve (QBASE) étant calculé en référence à une carte définissant l'instant standard d'ouverture de valve (QBASE) en fonction de l'état de fonctionnement du moteur diesel (2) tout en permettant à l'avance un retard dans la réponse de la valve de réglage d'injection (23); et
   - à calculer ledit instant de consigne d'ouverture de valve (QFIN) en compensant l'instant standard d'ouverture de valve (QBASE) sur la base de l'instant calculé de consigne de fermeture de valve (ONANG) et de la vitesse de rotation du moteur (NE).

10. Un procédé de commande d'injection de carburant pour un moteur diesel selon la revendication 9, dans lequel l'état de fonctionnement du moteur diesel (2) est mesuré à partir du groupe comprenant un accélérateur à papillon des gaz et un appareil de mesure de rotation de moteur.

Fig.1

# Fig.2

EP 0 425 798 B2

# Fig.3

START

S101 — Read NE, ACCP and THW

S102 — Aquire QBASE based on NE and ACCP

S103 — Control injection rate?

YES | NO

Close spill valve at a predetermined timing before a compressing process

S104

S106 — Aquire ONANG based on NE and THW

Control opening of spill valve based on QBASE

S105

S107 — Compensate TRGCA based on ONANG

S108 — Compute QFIN based on NE, ONANG, QBASE, etc.

S109 — Control timing control valve based on TRGCA

S110 — Control closing of electromagnetic spill valve based on ONANG

S111 — Control opening of spill valve based on QFIN

RETURN

EP 0 425 798 B2

# Fig.4

# Fig.5

EP 0 425 798 B2

# Fig.6

18

# Fig.7

Injection volume

7 8 9 10

12 (x100rpm)

0

Injection end timing

# Fig.8

Injection volume

7 8 9

10

12 (x100rpm)

0

Injection end timing

# Fig.9

Injection volume

7 8

9

10

12 (x100rpm)

0

Injection end timing

# Fig.10

# Fig.11